# EUROPEAN PATENT APPLICATION

(11) **EP 4 694 417 A1**
(43) Date of publication of application: **11.02.2026**
(21) Application number: 23931240.8
(22) Date of filing: 03.04.2023
(51) Int. Cl.: H04W 64/00

(54) **REFERENCE SIGNAL MEASUREMENT METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Zimmermann, Tankred Klaus
(86) International application number: PCT/CN2023/086049
(87) International publication number: WO 2024/207164

(57) **Abstract**

The present invention relates to a method for measuring a reference signal and apparatus, a device, and a storage medium. The method comprises: sending first information, wherein the first information is used for indicating a carrier phase of a reference signal, and wherein the carrier phase is a carrier phase corresponding to a reference point. By reporting the carrier phase of the reference signal that is determined on the basis of the reference point, the positioning accuracy of positioning based on the carrier phase is improved.

## Description

### FIELD

The present invention relates to the field of communication technologies, and in particular to a method for measuring a reference signal, an apparatus, a device and a storage medium.

### BACKGROUND

In related arts, positioning methods based on carrier phase are being studied to improve positioning accuracy. In the carrier phase-based positioning method, the content that needs to be measured and reported includes at least one of a fractional part of the carrier and an integer number of cycles. The fractional part represents a part less than one full cycle. The integer number of cycles represents the number of exactly full cycles.

### SUMMARY

Embodiments of the present invention provide a method for measuring a reference signal, an apparatus, a device, and a storage medium.

According to embodiments of a first aspect of the present invention, a method for measuring a reference signal is provided, performed by a first device, the method includes: sending first information, where the first information is used to indicate a carrier phase of a reference signal, and wherein the carrier phase is a carrier phase corresponding to a reference point.

According to embodiments of a second aspect of the present invention, a method for measuring a reference signal is provided, performed by a second device, where the second device is a core network device, the method includes: receiving first information sent by a first device, where the first information is used to indicate a carrier phase of a reference signal, and wherein the carrier phase is a carrier phase corresponding to a reference point.

According to embodiments of a third aspect of the present invention, a method for measuring a reference signal is provided, used for a communication system, the method includes: a first device sending first information, where the first information is used to indicate a carrier phase of a reference signal, and wherein the carrier phase is a carrier phase corresponding to a reference point; and a second device receiving the first information.

According to embodiments of a fourth aspect of the present invention, a first reference signal measurement apparatus is provided, the apparatus includes: a sending module, configured to send first information, where the first information is used to indicate a carrier phase of a reference signal, and wherein the carrier phase is a carrier phase corresponding to a reference point.

According to embodiments of a fifth aspect of the present invention, a second reference signal measurement apparatus is provided, the apparatus includes: a receiving module, configured to receive first information sent by a first device, where the first information is used to indicate a carrier phase of a reference signal, and wherein the carrier phase is a carrier phase corresponding to a reference point.

According to embodiments of a sixth aspect of the present invention, a communication device is provided, including: one or more processors; where the processor is configured to invoke instructions to cause the communication device to perform the method for measuring a reference signal according to any one of the first aspect and the second aspect.

According to embodiments of a seventh aspect of the present invention, a communication system is provided, including a terminal and a network device, where the terminal is configured to implement the method for measuring a reference signal according to any one of the first aspect, and the network device is configured to implement the method for measuring a reference signal according to any one of the second aspect.

According to embodiments of an eighth aspect of the present invention, a storage medium is provided, where the storage medium stores instructions, when the instructions are run on a communication device, causing the communication device to perform the method for measuring a reference signal according to any one of the first aspect and the second aspect.

It should be understood that the above general description and the following detailed description are exemplary and explanatory only and are not restrictive of the present invention.

### BRIEF DESCRIPTION OF THE DRAWINGS

The drawings, which are incorporated in and constitute a part of this specification, illustrate embodiments consistent with the present invention and, together with the description, serve to explain the principles of the present invention.
FIG. 1 is a schematic diagram of a communication system architecture according to an embodiment of the present invention.
FIG. 2 is an interaction diagram of a method for measuring a reference signal according to an embodiment of the present invention.
FIG. 3a is a flowchart of a method for measuring a reference signal according to an exemplary embodiment.
FIG. 3b is a flowchart of another method for measuring a reference signal according to an exemplary embodiment.
FIG. 3c is a flowchart of yet another method for measuring a reference signal according to an exemplary embodiment.
FIG. 4a is a flowchart of still another method for measuring a reference signal according to an exemplary embodiment.
FIG. 4b is a flowchart of another method for measuring a reference signal according to an exemplary embodiment.
FIG. 4c is a flowchart of yet another method for measuring a reference signal according to an exemplary embodiment.
FIG. 4d is a flowchart of still another method for measuring a reference signal according to an exemplary embodiment.
FIG. 4e is a flowchart of another method for measuring a reference signal according to an exemplary embodiment.
FIG. 4f is a flowchart of yet another method for measuring a reference signal according to an exemplary embodiment.
FIG. 5 is a flowchart of still another method for measuring a reference signal according to an exemplary embodiment.
FIG. 6 is a schematic diagram of a reference signal measurement apparatus according to an exemplary embodiment.
FIG. 7 is a schematic diagram of another reference signal measurement apparatus according to an exemplary embodiment.
FIG. 8a is a schematic diagram of a communication device according to an exemplary embodiment.
FIG. 8b is a schematic diagram of a chip structure according to an exemplary embodiment.

### DETAILED DESCRIPTION

Exemplary embodiments will be described in detail here, examples of which are illustrated in the drawings. When the following description refers to the drawings, unless otherwise indicated, the same numbers in different drawings represent the same or similar elements. The implementations described in the following exemplary embodiments do not represent all implementations consistent with the present invention.

Currently, positioning methods based on carrier phase are being explored to improve accuracy, for example, the terminal position can be calculated through a downlink positioning method. Or the terminal position can be calculated through an uplink positioning method. However, during the transmission of the reference signal, the carrier phase value will change. Therefore, how to determine the carrier phase value at different positions is a problem that has not been solved yet.

Embodiments of the present invention provide a method for measuring a reference signal, apparatus, device, and storage medium.

According to embodiments of a first aspect of the present invention, a method for measuring a reference signal is provided, performed by a first device, the method includes: sending first information, where the first information is used to indicate a carrier phase of a reference signal, and wherein the carrier phase is a carrier phase corresponding to a reference point.

In the above embodiment, by reporting the carrier phase of the reference signal determined based on the reference point, the positioning accuracy based on the carrier phase is improved.

In accordance with embodiments of the first aspect, the carrier phase includes at least one of: a first carrier phase corresponding to a first path; a second carrier phase corresponding to a second path, where the second path is a path other than the first path; or a third carrier phase corresponding to any path.

In the above embodiment, by determining the carrier phases of different paths, the positioning accuracy based on the carrier phase is improved.

In accordance with embodiments of the first aspect, the first device is a terminal, and the reference signal is a downlink positioning reference signal.

The above embodiment can be applied to the terminal using the carrier phase for positioning, thereby improving the positioning accuracy based on the carrier phase.

In accordance with embodiments of the first aspect, the reference point includes any one of: an antenna connector of the first device; or an antenna of the first device.

In the above embodiment, possible forms of the reference point are provided when the first device is a terminal, so as to use the corresponding reference point to determine the carrier phase in suitable situations, thereby improving the positioning accuracy based on the carrier phase.

In accordance with embodiments of the first aspect, the first device is an access network device or a transmission and reception point (TRP), and the reference signal is an uplink sounding reference signal.

The above embodiment can be applied to the network device or TRP using the carrier phase for positioning, thereby improving the positioning accuracy based on the carrier phase.

In accordance with embodiments of the first aspect, the reference point includes any one of: an antenna connector of the first device; an antenna of the first device; or an array boundary connector of the first device.

In the above embodiment, possible forms of the reference point are provided when the first device is a network device or TRP, so as to use the corresponding reference point to determine the carrier phase in suitable situations, thereby improving the positioning accuracy based on the carrier phase.

In accordance with embodiments of the first aspect, the antenna connector includes at least one of: a transmission antenna connector; or a reception antenna connector.

In the above embodiment, multiple possible antenna connectors are provided, so as to use the corresponding antenna connector to determine the carrier phase in suitable situations, thereby improving the positioning accuracy based on the carrier phase.

In accordance with embodiments of the first aspect, the antenna includes at least one of: a transmission antenna; or a reception antenna.

In the above embodiment, multiple possible antennas are provided, so as to use the corresponding antenna to determine the carrier phase in suitable situations, thereby improving the positioning accuracy based on the carrier phase.

In accordance with embodiments of the first aspect, the array boundary connector includes at least one of: a transmission array boundary connector; or a reception array boundary connector.

In the above embodiment, multiple possible array boundary connectors are provided, so as to use the corresponding array boundary connector to determine the carrier phase in suitable situations, thereby improving the positioning accuracy based on the carrier phase.

In accordance with embodiments of the first aspect, the reference point includes the antenna connector of the first device, and the first device operates in a frequency range 1 (FR1).

In the above embodiment, the applicable situation where the first device uses the antenna connector to determine the carrier phase is provided, so that when the first device operates in FR1, the corresponding antenna connector is used to determine the carrier phase, thereby improving the positioning accuracy based on the carrier phase.

In accordance with embodiments of the first aspect, the reference point includes the antenna of the first device, and the first device operates in a frequency range 2 (FR2).

In the above embodiment, the applicable situation where the first device uses the antenna to determine the carrier phase is provided, so that when the first device operates in FR2, the corresponding antenna is used to determine the carrier phase, thereby improving the positioning accuracy based on the carrier phase.

In accordance with embodiments of the first aspect, the first device is an access network device, and the access network device includes at least one of: a type 1-C access network device; a type 1-O access network device; a type 2-O access network device; or a type 1-H access network device.

In the above embodiment, multiple possible forms of the network device are provided, so that the network device can use the carrier phase for positioning, thereby improving the positioning accuracy based on the carrier phase.

In accordance with embodiments of the first aspect, the method further includes: sending second information; where the second information includes at least one of: a timing error group (TEG); a phase error group (PEG); a reference signal time difference (RSTD); a relative time of arrival (RTOA); a reception-transmission time difference (rx-tx time difference); or a line of sight (LoS) or non-line of sight (NLoS) indicator.

In the above embodiment, multiple other parameters can also be reported for positioning, improving the positioning accuracy based on the carrier phase.

According to embodiments of a second aspect of the present invention, a method for measuring a reference signal is provided, performed by a second device, the method includes: receiving first information sent by a first device, where the first information is used to indicate a carrier phase of a reference signal, and wherein the carrier phase is a carrier phase corresponding to a reference point.

In the above embodiment, by receiving the carrier phase of the reference signal determined based on the reference point, the positioning accuracy based on the carrier phase is improved.

In accordance with embodiments of the second aspect, the carrier phase includes at least one of: a first carrier phase corresponding to a first path; a second carrier phase corresponding to a second path, where the second path is a path other than the first path; or a third carrier phase corresponding to any path.

In accordance with embodiments of the second aspect, the first device is a terminal, and the reference signal is a downlink positioning reference signal.

In accordance with embodiments of the second aspect, the reference point includes any one of: an antenna connector of the first device; or an antenna of the first device.

In accordance with embodiments of the second aspect, the first device is an access network device or a TRP, and the reference signal is an uplink sounding reference signal.

In accordance with embodiments of the second aspect, the reference point includes any one of: an antenna connector of the first device; an antenna of the first device; or an array boundary connector of the first device.

In accordance with embodiments of the second aspect, the antenna connector includes at least one of: a transmission antenna connector; or a reception antenna connector.

In accordance with embodiments of the second aspect, the antenna includes at least one of: a transmission antenna; or a reception antenna.

In accordance with embodiments of the second aspect, the array boundary connector includes at least one of: a transmission array boundary connector; or a reception array boundary connector.

In accordance with embodiments of the second aspect, the reference point includes the antenna connector of the first device, and the first device operates in a frequency range FR1.

In accordance with embodiments of the second aspect, the reference point includes the antenna of the first device, and the first device operates in a frequency range 2 (FR2).

In accordance with embodiments of the second aspect, the first device is an access network device, and the access network device includes at least one of: a type 1-C access network device; a type 1-O access network device; a type 2-O access network device; or a type 1-H access network device.

In accordance with embodiments of the second aspect, the method further includes: receiving second information; where the second information includes at least one of: a TEG; a PEG; an RSTD; an RTOA; a reception-transmission time difference; or a LoS or NLoS indicator.

In the above embodiment, multiple other parameters can also be received for positioning, improving the positioning accuracy based on the carrier phase.

In accordance with embodiments of the second aspect, the second device is any one of: a core network device; or a network element for location management.

In the above embodiment, multiple possible forms of the second device are provided, so that by receiving the carrier phase of the reference signal determined based on the reference point, the positioning accuracy based on the carrier phase is improved.

According to embodiments of a third aspect of the present invention, a method for measuring a reference signal is provided, used for a communication system, the method includes: a first device sending first information, where the first information is used to indicate a carrier phase of a reference signal, and wherein the carrier phase is a carrier phase corresponding to a reference point; and a second device receiving the first information.

In the above embodiment, the first device reports the carrier phase of the reference signal determined based on the reference point, so that the second device performs positioning based on the received carrier phase of the reference signal. Thereby, the positioning accuracy based on the carrier phase is improved.

According to embodiments of a fourth aspect of the present invention, a first reference signal measurement apparatus is provided, the apparatus includes: a sending module, configured to send first information, where the first information is used to indicate a carrier phase of a reference signal, and wherein the carrier phase is a carrier phase corresponding to a reference point.

According to embodiments of a fifth aspect of the present invention, a second reference signal measurement apparatus is provided, the apparatus includes: a receiving module, configured to receive first information sent by a first device, where the first information is used to indicate a carrier phase of a reference signal, and wherein the carrier phase is a carrier phase corresponding to a reference point.

According to embodiments of a sixth aspect of the present invention, a communication device is provided, including: one or more processors; where the processor is configured to invoke instructions to cause the communication device to perform the method for measuring a reference signal according to any one of the first aspect and the second aspect.

According to embodiments of a seventh aspect of the present invention, a communication system is provided, including a terminal and a network device, where the terminal is configured to implement the method for measuring a reference signal according to any one of the first aspect, and the network device is configured to implement the method for measuring a reference signal according to any one of the second aspect.

According to embodiments of an eighth aspect of the present invention, a storage medium is provided, where the storage medium stores instructions, when the instructions are run on a communication device, causing the communication device to perform the method for measuring a reference signal according to any one of the first aspect and the second aspect.

According to embodiments of a ninth aspect of the present invention, a program product is provided, when the program product is executed by a communication device, causing the communication device to perform the method described in the optional implementations of the first aspect and the third aspect, or the second aspect and the third aspect.

According to embodiments of a tenth aspect of the present invention, a computer program is provided, when run on a computer, causing the computer to perform the method described in the optional implementations of the first aspect and the third aspect, or the second aspect and the third aspect.

It can be understood that the above first reference signal measurement apparatus, second reference signal measurement apparatus, communication device, communication system, storage medium, program product, and computer program are all used to perform the methods provided by embodiments of the present invention. Therefore, the beneficial effects that can be achieved can be referred to the beneficial effects in the corresponding methods, which are not repeated here.

Embodiments of the present invention provide a "method for measuring a reference signal, an apparatus, a device, and a storage medium". In some embodiments, the term "method for measuring a reference signal" can be interchanged with terms such as "information processing method" and "communication method", the term "reference signal measurement apparatus" can be interchanged with terms such as "information processing apparatus" and "communication apparatus", and the term "communication system" can be interchanged with terms such as "information processing system".

Embodiments of the present invention are not exhaustive, but only illustrative of some embodiments, and are not specific limitations to the protection scope of the present invention. In case of no conflict, each step in one embodiment can be implemented as an independent embodiment, and the steps can be arbitrarily combined. For example, a solution after removing some steps in one embodiment can also be implemented as an independent embodiment, and the order of the steps in one embodiment can be arbitrarily exchanged. In addition, the optional implementations in one embodiment can be arbitrarily combined; furthermore, embodiments can be arbitrarily combined. For example, part or all of the steps of different embodiments can be arbitrarily combined, and one embodiment can be arbitrarily combined with the optional implementations of other embodiments.

According to embodiments of the present invention, unless otherwise specified and there is a logical conflict, the terms and/or descriptions between embodiments are consistent and can refer to each other. The technical features in different embodiments can be combined to form new embodiments according to their inherent logical relationships.

The terms used in embodiments of the present invention are only for the purpose of describing specific embodiments and are not intended to limit the present invention.

According to embodiments of the present invention, unless otherwise stated, an element expressed in the singular form, such as "a", "an", "the", "said", "the above", "the foregoing", "this", etc., may mean "one and only one", or may mean "one or more", "at least one", etc. For example, when a translation uses an article such as "a", "an", or "the" in English, the noun following the article can be understood as a singular form or a plural form.

According to embodiments of the present invention, "a plurality" means two or more.

In some embodiments, terms such as "at least one of", "at least one item of", "at least one of", "one or more", "a plurality of", "multiple", etc., can be used interchangeably.

Descriptions such as "at least one of A, B, C, ..." or "A and/or B and/or C, ..." used in accordance with embodiments of the present invention include the case where any one of A, B, C, ... exists alone, and also include any combination of any multiple of A, B, C, ..., each case can exist alone; for example, "at least one of A, B, C" includes the cases of A alone, B alone, C alone, combination of A and B, combination of A and C, combination of B and C, and combination of A, B, and C; for example, A and/or B includes the cases of A alone, B alone, and combination of A and B.

In some embodiments, expressions such as "in one case A, in another case B", "in response to one case A, in response to another case B", etc., may include the following technical solutions: performing A regardless of B, i.e., in some embodiments, A; performing B regardless of A, i.e., in some embodiments, B; selectively performing A or B, i.e., in some embodiments, selecting to perform A or B; performing both A and B, i.e., in some embodiments, A and B. When there are more branches such as A, B, C, etc., it is similar to the above.

The prefixes such as "first", "second", etc., used in accordance with embodiments of the present invention are only used to distinguish different described objects and do not limit the position, order, priority, quantity, or content of the described objects. The description of the described objects refers to the claims or the context in embodiments, and should not constitute an unnecessary limitation due to the use of the prefixes. For example, if the described object is a "field", the ordinal numbers before "field" in "first field" and "second field" do not limit the position or order between the "fields", and "first" and "second" do not limit whether the modified "fields" are in the same message, nor the sequence of "first field" and "second field". Another example, if the described object is a "level", the ordinal numbers before "level" in "first level" and "second level" do not limit the priority between the "levels". Another example, the quantity of the described object is not limited by the ordinal numbers, and can be one or more. Taking "first device" as an example, the quantity of "device" can be one or more. In addition, objects modified by different prefixes can be the same or different. For example, if the described object is a "device", "first device" and "second device" can be the same device or different devices, and their types can be the same or different; another example, if the described object is "information", "first information" and "second information" can be the same information or different information, and their content can be the same or different.

In some embodiments, "including A", "containing A", "used to indicate A", "carrying A" can be interpreted as directly carrying A, or indirectly indicating A.

In some embodiments, terms such as "in response to...", "in response to determining...", "in the case of...", "when...", "if...", etc., can be used interchangeably.

In some embodiments, terms such as "greater than", "greater than or equal to", "not less than", "more than", "more than or equal to", "not less than", "higher than", "higher than or equal to", "not lower than", "above", etc., can be used interchangeably. Terms such as "less than", "less than or equal to", "not greater than", "less than", "less than or equal to", "not more than", "lower than", "lower than or equal to", "not higher than", "below", etc., can be used interchangeably.

In some embodiments, an apparatus, etc., can be interpreted as physical or virtual, and its name is not limited to the names recorded in the embodiments. Terms such as "apparatus", "equipment", "device", "circuit", "network element", "node", "function", "unit", "section", "system", "network", "chip", "chip system", "entity", "subject", etc., can be used interchangeably.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc., can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., can be used interchangeably.

In some embodiments, an access network device, core network device, or network device can be replaced by a terminal. For example, embodiments of the present invention can also be applied to a structure where communication between an access network device, core network device, or network device and a terminal is replaced by communication between multiple terminals (e.g., which may also be called device-to-device (D2D), vehicle-to-everything (V2X), etc.). In this case, the terminal may have all or part of the functions of the access network device. In addition, terms such as "uplink" and "downlink" can be replaced by terms corresponding to inter-terminal communication (e.g., "sidelink"). For example, an uplink channel, downlink channel, etc., can be replaced by a sidelink channel, and an uplink link, downlink link, etc., can be replaced by a sidelink.

In some embodiments, a terminal can be replaced by an access network device, core network device, or network device. In this case, the access network device, core network device, or network device may have all or part of the functions of the terminal.

In some embodiments, the names of information, etc., are not limited to the names recorded in the embodiments. Terms such as "information", "message", "signal", "signaling", "report", "configuration", "indication", "instruction", "command", "channel", "parameter", "field", "symbol", "code element", "codebook", "codeword", "codepoint", "bit", "data", "program", "chip", etc., can be used interchangeably.

In some embodiments, terms such as "uplink", "uplink link", "physical uplink", etc., can be used interchangeably. Terms such as "downlink", "downlink link", "physical downlink", etc., can be used interchangeably. Terms such as "sidelink", "sidelink communication", "direct link", "direct link communication", etc., can be used interchangeably.

In some embodiments, terms such as "downlink control information (DCI)", "downlink (DL) assignment", "DL DCI", "uplink (UL) grant", "UL DCI", etc., can be used interchangeably.

In some embodiments, terms such as "physical downlink shared channel (PDSCH)", "DL data", etc., can be used interchangeably. Terms such as "physical uplink shared channel (PUSCH)", "UL data", etc., can be used interchangeably.

In some embodiments, terms such as "radio", "wireless", "radio access network (RAN)", "access network (AN)", "RAN-based", etc., can be used interchangeably.

In some embodiments, terms such as "search space", "search space set", "search space configuration", "search space set configuration", "control resource set (CORESET)", "CORESET configuration", etc., can be used interchangeably.

In some embodiments, terms such as "synchronization signal (SS)", "synchronization signal block (SSB)", "reference signal (RS)", "pilot", "pilot signal", etc., can be used interchangeably.

In some embodiments, terms such as "time", "time point", "time", "time position", etc., can be used interchangeably. Terms such as "duration", "time period", "time window", "window", "time", etc., can be used interchangeably.

In some embodiments, terms such as "component carrier (CC)", "cell", "frequency carrier", "carrier frequency", etc., can be used interchangeably.

In some embodiments, terms such as "resource block (RB)", "physical resource block (PRB)", "sub-carrier group (SCG)", "resource element group (REG)", "PRB pair", "RB pair", "resource element (RE)", etc., can be used interchangeably.

In some embodiments, terms such as "wireless access scheme", "waveform", etc., can be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc., can be used interchangeably.

In some embodiments, terms such as "frame", "radio frame", "subframe", "slot", "subslot", "mini-slot", "symbol", "code element", "transmission time interval (TTI)", etc., can be used interchangeably.

In some embodiments, "obtaining", "acquiring", "getting", "receiving", "transmitting", "bidirectional transmission", "sending and/or receiving" can be used interchangeably, which can be interpreted as receiving from another subject, obtaining from a protocol, obtaining by own processing, self-implementation, etc.

In some embodiments, terms such as "sending", "transmitting", "reporting", "delivering", "transmitting", "bidirectional transmission", "sending and/or receiving", etc., can be used interchangeably.

In some embodiments, "predetermined", "preset" can be interpreted as predefined in a protocol, etc., or as the apparatus performing a preset action.

In some embodiments, "determining" can be interpreted as judging, deciding, calculating, computing, processing, deriving, investigating, searching, looking up, retrieving, inquiring, ascertaining, receiving, transmitting, inputting, outputting, accessing, resolving, selecting, choosing, establishing, comparing, "assuming", "expecting", "considering", broadcasting, notifying, communicating, forwarding, configuring, reconfiguring, allocating, mapping, assigning, etc., but not limited thereto.

In some embodiments, judging or determining can be performed by a value represented by 1 bit (0 or 1), or by a Boolean value represented by true or false, or by numerical comparison (e.g., comparison with a predetermined value), but not limited thereto.

In some embodiments, "network" can be interpreted as a device included in the network (e.g., an access network device, a core network device, etc.).

In some embodiments, "not expecting to receive" can be interpreted as not receiving on time domain resources and/or frequency domain resources, or as not performing subsequent processing on the data, etc., after receiving the data, etc.; "not expecting to send" can be interpreted as not sending, or as sending but not expecting the receiver to respond to the sent content.

In some embodiments, obtaining data, information, etc., can comply with the laws and regulations of the country where it is located.

In some embodiments, data, information, etc., can be obtained after obtaining user consent.

In addition, each element, each row, or each column in the tables according to embodiments of the present invention can be implemented as an independent embodiment. Any combination of elements, rows, or columns can also be implemented as an independent embodiment.

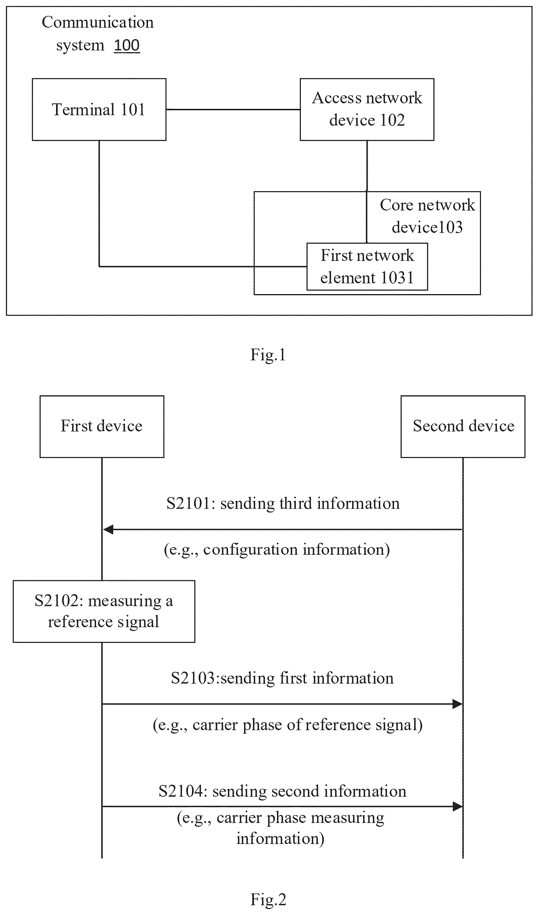

FIG. 1 is a schematic diagram of a communication system architecture according to an embodiment of the present invention.

As shown in FIG. 1, a communication system 100 includes a terminal 101, an access network device 102, and a core network device 103.

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but not limited thereto.

In some embodiments, the access network device 102 is, for example, a node or device that connects the terminal to a wireless network. The access network device may include at least one of an evolved NodeB (eNB) in a 5G communication system, a next generation evolved NodeB (ng-eNB), a next generation NodeB (gNB), a node B (NB), a home node B (HNB), a home evolved nodeB (HeNB), a wireless backhaul device, a radio network controller (RNC), a base station (BS), a base station controller (BSC), a base transceiver station (BTS), a baseband unit (BBU), a mobile switching center, a base station in a 6G communication system, an Open RAN, a Cloud RAN, a base station in other communication systems, an access node in a wireless fidelity (WiFi) system, but not limited thereto.

In some embodiments, the technical solution of the present invention can be applied to an Open RAN architecture. In this case, the interfaces between access network devices or within an access network device involved in accordance with embodiments of the present invention can become internal interfaces of the Open RAN, and the processes and information interaction between these internal interfaces can be implemented by software or programs.

In some embodiments, the access network device 102 may be composed of a central unit (CU) and a distributed unit (DU), where the CU may also be called a control unit. The structure of CU-DU can split the protocol layers of the access network device, with the functions of some protocol layers placed in the CU for centralized control, and the remaining part or all of the protocol layers distributed in the DU, controlled centrally by the CU, but not limited thereto.

In some embodiments, the core network device 103 may be one device, including a first network element 1031. Of course, the core network device 103 may also include any other network elements besides the first network element 1031. The core network device 103 may also be multiple devices or device groups, respectively including all or part of the first network element 1031 and any other network elements. The network element may be virtual or physical. The core network includes, for example, at least one of an Evolved Packet Core (EPC), a 5G Core Network (5GCN), or a Next Generation Core (NGC).

In some embodiments, the first network element 1031 is, for example, a location management function (LMF).

In some embodiments, the first network element 1031 is used for location function management, and the name is not limited thereto.

In some embodiments, the first network element 1031 may be independent of the core network device 103.

In some embodiments, the first network element 1031 may be part of the core network device 103.

It can be understood that the communication system described in accordance with embodiments of the present invention is to illustrate the technical solutions of embodiments of the present invention more clearly, and does not constitute a limitation to the technical solutions provided by the embodiments of the present invention. Those skilled in the art can understand that with the evolution of system architecture and the emergence of new business scenarios, the technical solutions provided by embodiments of the present invention are equally applicable to similar technical problems.

The following embodiments of the present invention can be applied to the communication system 100 shown in FIG. 1, or part of the entities, but not limited thereto. The entities shown in FIG. 1 are exemplary. The communication system may include all or part of the entities in FIG. 1, and may also include other entities not shown in FIG. 1. The number and form of the entities are arbitrary. The connection relationships between the entities are exemplary. The entities may not be connected or may be connected. The connection may be in any manner, may be direct or indirect, and may be wired or wireless.

Embodiments of the present invention can be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), future radio access (FRA), new-radio access technology (RAT), new radio (NR), new radio access (NX), future generation radio access (FX), Global System for Mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X), systems using other communication methods, next-generation systems extended based on them, etc. In addition, a combination of multiple systems (e.g., a combination of LTE or LTE-A and 5G, etc.) may be applied.

According to embodiments of the present invention, in the discussion of releases (Rel), positioning methods based on carrier phase are being discussed to improve positioning accuracy. In the carrier phase-based positioning method, the content that needs to be measured and reported includes at least one of a fractional part of the reference signal carrier phase and an integer number of cycles of the reference signal carrier phase. The fractional part of the reference signal carrier phase refers to the fractional part that is less than one full cycle. The integer number of cycles of the reference signal carrier phase corresponds to the number of exactly full cycles.

In some embodiments, considering the downlink positioning process, the terminal may receive a downlink positioning reference signal configuration from a network device. The network device may be, for example, a core network device or an access network device. Usually, the core network device may send the downlink positioning reference signal configuration. The terminal may, based on the downlink positioning reference signal (DL PRS) configuration, receive and measure downlink positioning reference signals sent by various TRPs at the access network device. The terminal may calculate the location of its own device, or the terminal may send a measurement report to the core network device, so that the core network device calculates the location of the terminal based on the measurement report reported by the terminal.

In some embodiments, considering the uplink positioning process, the terminal may receive an uplink positioning reference signal configuration sent by a network device. The network device may be, for example, a core network device or an access network device. Usually, the access network device may send the uplink positioning reference signal configuration. The terminal may, based on the uplink sounding reference signal (UL SRS) configuration, send an uplink sounding reference signal. It can be understood that the uplink positioning reference signal may include an uplink sounding reference signal (UL SRS). Embodiments of the present invention describe the uplink positioning reference signal as UL SRS as an example, but it should be understood that the present invention is not limited thereto. For example, in accordance with other embodiments, the uplink positioning reference signal may also include a newly defined reference signal dedicated to uplink positioning.

It is worth noting that in accordance with embodiments of the present invention, the term "positioning reference signal" and "sounding reference signal" can be used interchangeably, and the present invention does not limit this.

The TRP at the access network device receives and measures the uplink sounding reference signal. The TRP may send the measurement report to the core network device, so that the core network device calculates the location of the terminal based on the measurement report reported by the TRP. Optionally, the measurement report may be interchanged with terms such as measurement information.

However, during the transmission of the reference signal, i.e., the aforementioned uplink sounding reference signal and/or downlink positioning reference signal, the measured carrier phase value of the reference signal will change. For example, the carrier phase value measured by the terminal at different positions of its own device may be different. Therefore, when measuring and reporting the carrier phase value, it can be measured based on a reference point. For example, the carrier phase value measured at the reference point is used as a reference. But currently, there is no scheme for carrier phase measurement based on a reference point. Therefore, how to perform carrier phase measurement based on a reference point becomes a problem that needs to be solved.

FIG. 2 is an interaction diagram of a method for measuring a reference signal according to an embodiment of the present invention. As shown in FIG. 2, an embodiment of the present invention relates to a method for measuring a reference signal, used for a communication system 100, the method includes:
Step S2101: a second device sending third information to a first device.

In some embodiments, the third information is used to configure a positioning reference signal for positioning measurement.

In some embodiments, the third information is positioning reference signal configuration information.

In some embodiments, the name of the third information is not limited, and it is, for example, "first configuration information", "uplink positioning reference signal configuration information", "uplink sounding reference signal configuration information", "downlink positioning reference signal configuration information", "indication information", etc.

In some embodiments, the positioning reference signal includes an uplink positioning reference signal.

In some embodiments, the positioning reference signal includes a downlink positioning reference signal.

In some embodiments, the positioning reference signal includes an uplink positioning reference signal and a downlink positioning reference signal.

In some embodiments, the downlink positioning reference signal may be DL PRS.

In some embodiments, the uplink positioning reference signal may be UL SRS.

In some embodiments, the first device may be the terminal 101.

In some embodiments, the first device may be the access network device 102.

In some embodiments, the first device may be a TRP corresponding to the access network device 102.

In some embodiments, the first device is the terminal 101, and the second device is the access network device 102.

In some embodiments, the first device is the terminal 101, and the second device is a TRP corresponding to the access network device 102.

In some embodiments, the second device may be the core network device 103.

In some embodiments, the second device may be a network element for location management.

In some embodiments, the second device may be a network element for location management in the core network device 103.

In some embodiments, the second device may be a location management function (LMF).

In some embodiments, the core network device 103 sends third information for configuring a downlink positioning reference signal to the access network device 102, so that the access network device 102, based on the third information, determines the downlink positioning reference signal to be sent to the terminal 101.

For example, the access network device 102 sends a downlink positioning reference signal to the terminal 101. Another example, a TRP corresponding to the access network device 102 sends a downlink positioning reference signal to the terminal 101.

In some embodiments, the core network device 103 sends third information for configuring a downlink positioning reference signal to the terminal device 101, so that the terminal device 101, based on the third information, determines the downlink positioning reference signal to be received.

In some embodiments, the downlink positioning reference signal may be DL PRS.

In some embodiments, the access network device 102 sends third information for configuring an uplink sounding reference signal to the terminal 101, so that the terminal 101, based on the third information, determines the uplink sounding reference signal to be sent to the access network device 102.

In some embodiments, the access network device 102 sends third information for configuring an uplink sounding reference signal to the terminal 101, so that the terminal 101, based on the third information, determines the uplink sounding reference signal to be sent to a TRP corresponding to the access network device 102.

In some embodiments, the core network device 103 sends third information for configuring an uplink sounding reference signal to the terminal 101, so that the terminal 101, based on the third information, determines the uplink sounding reference signal to be sent to the access network device 102 or a TRP corresponding to the access network device 102.

In some embodiments, the core network device 103 sends third information for configuring an uplink sounding reference signal to the access network device 102. The access network device 102 forwards this third information for configuring the uplink sounding reference signal to the terminal 101, so that the terminal 101, based on the third information, determines the uplink sounding reference signal to be sent to the access network device 102 or a TRP corresponding to the access network device 102.

For example, the terminal 101 sends an uplink sounding reference signal to the access network device 102. Another example, the terminal 101 sends an uplink sounding reference signal to a TRP corresponding to the access network device 102.

In some embodiments, the core network device 103 sends third information for configuring an uplink sounding reference signal to the access network device 102. The access network device 102 forwards this third information for configuring the uplink sounding reference signal to the terminal 101, so that the access network device 102, based on the third information, determines the uplink sounding reference signal to be received.

In some embodiments, the uplink sounding reference signal may be UL SRS.

Step S2102: the first device measuring the reference signal.

In some embodiments, the first device receives the reference signal and measures the reference signal.

In some embodiments, the reference signal can be considered as the aforementioned uplink sounding reference signal or downlink positioning reference signal. Therefore, the term "positioning reference signal" in accordance with embodiments of the present invention can be used interchangeably with "reference signal". The "positioning reference signal" may be an "uplink sounding reference signal" or a "downlink positioning reference signal".

In some embodiments, the first device measures the reference signal to determine the carrier phase of the reference signal.

In some embodiments, the first device measures the reference signal based on a reference point to determine the carrier phase of the reference signal.

In some embodiments, the first device is the terminal 101, and the carrier phase of the reference signal is the carrier phase of the DL PRS.

In some embodiments, the first device is the access network device 102, and the carrier phase of the reference signal is the carrier phase of the UL SRS.

In some embodiments, the first device is a TRP corresponding to the access network device 102, and the carrier phase of the reference signal is the carrier phase of the UL SRS.

In some embodiments, the first device determines a first carrier phase.

In some embodiments, the first carrier phase may be the carrier phase corresponding to a first path of the reference signal.

In some embodiments, the first path is the path corresponding to the reference signal that arrives first in the time dimension.

In some embodiments, the first path is the path corresponding to the Nth arriving reference signal in the time dimension, where N is a positive integer.

In some embodiments, the first path is a certain path corresponding to a preset reference signal. For example, it may be predefined or determined based on configuration information in advance. The present invention does not limit this.

In some embodiments, the first path may be a line of sight (LoS) path, indicating that the reference signal has not undergone refraction, reflection, etc., during propagation.

In some embodiments, the first device determines a second carrier phase.

In some embodiments, the second carrier phase may be the carrier phase corresponding to a second path of the reference signal.

In some embodiments, the second path is a path other than the path corresponding to the first arriving reference signal in the time dimension.

It can be understood that the reference signal may propagate through many paths. For example, the direct path is usually the first path. But in some cases, there are often not only the first path. If the reference signal undergoes various refractions, the final paths may be different due to different angles. The second path may be any path other than the first path.

In some embodiments, the first device determines a third carrier phase.

In some embodiments, the third carrier phase may be the carrier phase corresponding to any path of the reference signal.

In some embodiments, the carrier phase of the reference signal may also not distinguish between different paths. Therefore, the first device may also determine the carrier phase of the reference signal without distinguishing different paths.

In some embodiments, the first device is the terminal 101, and the reference point may include an antenna connector of the terminal 101.

In some embodiments, the first device is the terminal 101, and the terminal 101 operates in FR1. The reference point may include the antenna connector of the terminal 101.

In some embodiments, the reference point is a transmission antenna connector of the terminal 101.

In some embodiments, the reference point is a reception antenna connector of the terminal 101.

In some embodiments, the first device is the terminal 101, and the reference point may include an antenna of the terminal 101.

In some embodiments, the first device is the terminal 101, and the terminal 101 operates in FR2. The reference point may include the antenna of the terminal 101.

In some embodiments, the reference point is a transmission antenna of the terminal 101.

In some embodiments, the reference point is a reception antenna of the terminal 101.

In some embodiments, since the antenna corresponding to FR1 can be detached from the antenna connector, for FR1, the antenna connector can be considered. But the antenna corresponding to FR2 cannot be detached from the antenna connector. Therefore, for FR2, only the antenna itself can be considered directly.

In some embodiments, reference may be made to Table 1, which shows the frequency ranges corresponding to different FRs.

**Table 1**

| Frequency Range Name | Corresponding Frequency Range |
|---|---|
| FR1 | 450 MHz - 6000 MHz |
| FR2 | 24250 MHz - 52600 MHz |

As can be seen, Table 1 shows that the frequency range corresponding to FR1 may be 450 MHz -- 6000 MHz. The frequency range corresponding to FR2 may be 24250 MHz -- 52600 MHz.

In some embodiments, the first device is the access network device 102, and the reference point may include an antenna connector of the access network device 102.

In some embodiments, the first device is the access network device 102, and the access network device 102 is a type 1-C base station. The reference point may include the antenna connector of the access network device 102.

In some embodiments, the reference point is a transmission antenna connector of the access network device 102.

In some embodiments, the reference point is a reception antenna connector of the access network device 102.

In some embodiments, the first device is a TRP corresponding to the access network device 102, and the reference point may include an antenna connector of the TRP corresponding to the access network device 102.

In some embodiments, the first device is a TRP corresponding to the access network device 102, and the TRP is a TRP corresponding to a type 1-C base station. The reference point may include the antenna connector of the TRP corresponding to the access network device 102.

In some embodiments, the reference point is a transmission antenna connector of the TRP corresponding to the access network device 102.

In some embodiments, the reference point is a reception antenna connector of the TRP corresponding to the access network device 102.

In some embodiments, a type 1-C base station represents an NR base station operating at FR1 with a requirement set consisting only of conducted requirements defined at individual antenna connectors (NR base station operating at FR1 with requirements set consisting only of conducted requirements defined at individual antenna connector).

In some embodiments, the first device is the access network device 102, and the reference point may include an antenna of the access network device 102.

In some embodiments, the reference point is a transmission antenna of the access network device 102.

In some embodiments, the reference point is a reception antenna of the access network device 102.

In some embodiments, the first device is the access network device 102, and the access network device 102 is a type 1-O base station device. The reference point may include the antenna of the access network device 102.

In some embodiments, the first device is the access network device 102, and the access network device 102 is a type 2-O base station device. The reference point may include the antenna of the access network device 102.

In some embodiments, the first device is a TRP corresponding to the access network device 102, and the reference point may include an antenna of the TRP corresponding to the access network device 102.

In some embodiments, the first device is a TRP corresponding to the access network device 102, and the TRP is a TRP corresponding to a type 1-O base station device. The reference point may include the antenna of the TRP corresponding to the access network device 102.

In some embodiments, the first device is a TRP corresponding to the access network device 102, and the TRP is a TRP corresponding to a type 2-O base station device. The reference point may include the antenna of the TRP corresponding to the access network device 102.

In some embodiments, the reference point is a transmission antenna of the TRP corresponding to the access network device 102.

In some embodiments, the reference point is a reception antenna of the TRP corresponding to the access network device 102.

In some embodiments, a type 1-O base station device represents an access network device operating at FR1 with a requirement set consisting only of over-the-air (OTA) requirements defined at the radiated interface boundary (RIB) (NR base station operating at FR1 with a requirement set consisting only of OTA requirements defined at the RIB).

In some embodiments, a type 2-O base station device represents an access network device operating at FR2 with a requirement set consisting only of OTA requirements defined at the RIB (NR base station operating at FR2 with a requirement set consisting only of OTA requirements defined at the RIB).

In some embodiments, the first device is the access network device 102, and the reference point may include an array boundary connector of the access network device 102.

In some embodiments, the first device is the access network device 102, and the access network device 102 is a type 1-H base station device. The reference point may include the array boundary connector of the access network device 102.

In some embodiments, the reference point is a transmission array boundary connector of the access network device 102.

In some embodiments, the reference point is a reception array boundary connector of the access network device 102.

In some embodiments, the first device is a TRP corresponding to the access network device 102, and the reference point may include an array boundary connector of the TRP corresponding to the access network device 102.

In some embodiments, the first device is a TRP corresponding to the access network device 102, and the TRP is a TRP corresponding to a type 1-H base station device. The reference point may include the array boundary connector of the TRP corresponding to the access network device 102.

In some embodiments, the reference point is a transmission array boundary connector of the TRP corresponding to the access network device 102.

In some embodiments, the reference point is a reception array boundary connector of the TRP corresponding to the access network device 102.

In some embodiments, a type 1-H base station device represents an access network device operating at FR1 with a requirement set consisting of conducted requirements defined at individual transceiver array boundary (TAB) connectors and OTA requirements defined at the RIB (NR base station operating at FR1 with a requirement set consisting of conducted requirements defined at individual TAB connectors and OTA requirements defined at RIB).

In some embodiments, since the antenna array can be detached from the connector, the array boundary connector is considered.

Step S2103: the first device sending first information to the second device.

Optional implementations of step S2103 can refer to the optional implementations of step S2102 in FIG. 2 and other related parts in embodiments involved in FIG. 2, which are not repeated here.

In some embodiments, after measuring the reference signal, the first device sends the measured first information to the second device.

In some embodiments, the first device is the terminal 101, and the second device is the core network device 103. The terminal 101 sends the first information obtained by measuring the DL PRS to the core network device 103.

In some embodiments, the first device is the access network device 102, and the second device is the core network device 103. The access network device 102 sends the first information obtained by measuring the UL SRS to the core network device 103.

In some embodiments, the first information is used to indicate the carrier phase of the reference signal.

In some embodiments, the first information may be carrier phase indication information.

In some embodiments, the name of the first information is not limited, and it is, for example, "indication information", "reference signal carrier phase indication information", "carrier phase indication information of the reference signal", etc.

In some embodiments, the first information may be the first carrier phase.

In some embodiments, the first information may be the second carrier phase.

In some embodiments, the first information may be the third carrier phase.

Step S2104: the first device sending second information to the second device.

In some embodiments, after measuring the reference signal, the first device sends the measured second information to the second device.

In some embodiments, the first device is the terminal 101, and the second device is the core network device 103. The terminal 101 sends the second information obtained by measuring the DL PRS to the core network device 103.

In some embodiments, the first device is the access network device 102, and the second device is the core network device 103. The access network device 102 sends the second information obtained by measuring the UL SRS to the core network device 103.

In some embodiments, the second information is used to indicate other information measured for the reference signal besides the carrier phase.

In some embodiments, the second information may be carrier phase measurement information.

In some embodiments, the name of the second information is not limited, and it is, for example, "measurement information", "reference signal carrier phase measurement information", etc.

In some embodiments, the second information includes a TEG.

In some embodiments, the second information includes a transmission TEG.

In some embodiments, the second information includes a reception TEG.

In some embodiments, the second information includes a transmission TEG and a reception TEG.

In some embodiments, the second information includes a PEG.

In some embodiments, the second information includes a transmission PEG.

In some embodiments, the second information includes a reception PEG.

In some embodiments, the second information includes a transmission PEG and a reception PEG.

In some embodiments, the first device is the terminal 101, and the second information includes an RSTD.

In some embodiments, the first device is the access network device 102, and the second information includes an RTOA.

In some embodiments, the first device is a TRP corresponding to the access network device 102, and the second information includes an RTOA.

In some embodiments, the second information includes a transmission-reception time difference.

In some embodiments, the second information includes a LoS indicator.

In some embodiments, the second information includes an NLoS indicator.

In some embodiments, the second information includes any one or more of the above parameters.

In some embodiments, the first information and the second information may be included in one information for sending.

For example, the information may be information indicating the measurement result for the reference signal. It may be called "measurement report", "reference signal measurement report", "uplink sounding reference signal measurement report", "uplink positioning reference signal measurement report", "downlink positioning reference signal measurement report", etc. The present invention does not limit the name of this information.

In some embodiments, the first information and the second information may be included in different information for sending.

For example, the first information and the second information may be different information. For example, the first information is information indicating the carrier phase for the reference signal. The second information is information indicating the measurement result for the reference signal. The present invention does not limit the names of the first information and the second information.

The method for measuring a reference signal involved in embodiments of the present invention may include at least one of steps S2101 to S2104. For example, step S2103 may be implemented as an independent embodiment. For example, step S2103 + step S2104 may be implemented as an independent embodiment, step S2102 + step S2103 + step S2104 may be implemented as an independent embodiment, step S2101 + step S2102 + step S2103 + step S2104 may be implemented as an independent embodiment, but not limited thereto.

In some embodiments, steps S2101 and S2104 are optional, and in different embodiments, one or more of these steps may be omitted or replaced.

In some embodiments, steps S2101, S2102, and S2104 are optional, and in different embodiments, one or more of these steps may be omitted or replaced.

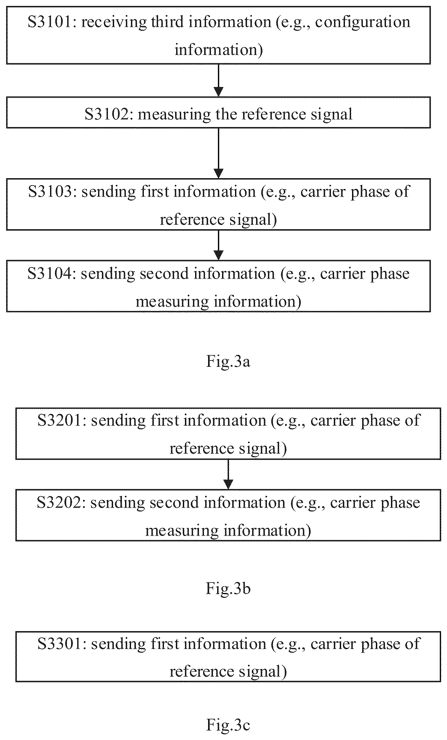

FIG. 3a is a flowchart of a method for measuring a reference signal according to an exemplary embodiment. As shown in FIG. 3a, an embodiment of the present invention relates to a method for measuring a reference signal, performed by the terminal 101, the method includes:
Step S3101: obtaining third information.

Optional implementations of step S3101 can refer to the optional implementations of step S2101 in FIG. 2 and other related parts in embodiments involved in FIG. 2, which are not repeated here.

In some embodiments, the terminal 101 receives third information sent by the second device. But not limited thereto, it may also receive first information sent by other entities.

In some embodiments, the terminal 101 obtains third information specified by a protocol.

In some embodiments, the terminal 101 obtains third information from an upper layer(s).

In some embodiments, the terminal 101 processes to obtain the third information.

In some embodiments, step S3101 is omitted, and the terminal 101 autonomously implements the function indicated by the third information, or the above function is default or preset.

In some embodiments, if the third information indicates that the access network device 102 measures the reference signal, the terminal 101 may not perform subsequent steps, but instead sends the reference signal to the access network device 102 based on the third information. For example, UL SRS.

Step S3102: measuring the reference signal.

Optional implementations of step S3102 can refer to the optional implementations of step S2102 in FIG. 2 and other related parts in embodiments involved in FIG. 2, which are not repeated here.

Step S3103: sending first information.

Optional implementations of step S3103 can refer to the optional implementations of step S2103 in FIG. 2 and other related parts in embodiments involved in FIG. 2, which are not repeated here.

In some embodiments, the terminal 101 sends the first information to the second device, but not limited thereto, it may also send the first information to other entities.

Step S3104: sending second information.

Optional implementations of step S3104 can refer to the optional implementations of step S2104 in FIG. 2 and other related parts in embodiments involved in FIG. 2, which are not repeated here.

In some embodiments, the terminal 101 sends the second information to the second device, but not limited thereto, it may also send the second information to other entities.

The method for measuring a reference signal involved in embodiments of the present invention may include at least one of steps S3101 to S3104. For example, step S3103 + step S3104 may be implemented as an independent embodiment, step S3102 + step S3103 + step S3104 may be implemented as an independent embodiment, step S3101 + step S3102 + step S3103 + step S3104 may be implemented as an independent embodiment, but not limited thereto.

In some embodiments, steps S3101 and S3104 are optional, and in different embodiments, one or more of these steps may be omitted or replaced.

In some embodiments, steps S3101, S3102, and S3104 are optional, and in different embodiments, one or more of these steps may be omitted or replaced.

FIG. 3b is a flowchart of another method for measuring a reference signal according to an exemplary embodiment. As shown in FIG. 3b, an embodiment of the present invention relates to a method for measuring a reference signal, performed by the terminal 101, the method includes:
Step S3201: sending first information.

Optional implementations of step S3201 can refer to the optional implementations of step S2102 in FIG. 2, the optional implementations of step S2103 in FIG. 2, and other related parts in embodiments involved in FIG. 2, which are not repeated here.

In some embodiments, the terminal 101 sends the first information to the second device, but not limited thereto, it may also send the first information to other entities.

Step S3202: sending second information.

Optional implementations of step S3202 can refer to the optional implementations of step S2104 in FIG. 2 and other related parts in embodiments involved in FIG. 2, which are not repeated here.

In some embodiments, the terminal 101 sends the second information to the second device, but not limited thereto, it may also send the second information to other entities.

The method for measuring a reference signal involved in embodiments of the present invention may include at least one of steps S3201 to S3202.

In some embodiments, step S3102 is optional, and in different embodiments, this step may be omitted or replaced.

FIG. 3c is a flowchart of yet another method for measuring a reference signal according to an exemplary embodiment. As shown in FIG. 3b, an embodiment of the present invention relates to a method for measuring a reference signal, performed by the terminal 101, the method includes:
Step S3301: sending first information.

Optional implementations of step S3301 can refer to the optional implementations of step S2102 in FIG. 2, the optional implementations of step S2103 in FIG. 2, and other related parts in embodiments involved in FIG. 2, which are not repeated here.

In some embodiments, the first information is used to indicate a carrier phase of a reference signal, and wherein the carrier phase is a carrier phase corresponding to a reference point.

In some embodiments, the carrier phase includes at least one of: a first carrier phase corresponding to a first path; a second carrier phase corresponding to a second path, where the second path is a path other than the first path; or a third carrier phase corresponding to any path.

In some embodiments, the first device is a terminal, and the reference signal is a downlink positioning reference signal.

In some embodiments, the reference point includes any one of: an antenna connector of the first device; or an antenna of the first device.

In some embodiments, the antenna connector includes at least one of: a transmission antenna connector; or a reception antenna connector.

In some embodiments, the antenna includes at least one of: a transmission antenna; or a reception antenna.

In some embodiments, the reference point includes the antenna connector of the first device, and the first device operates in FR1.

In some embodiments, the reference point includes the antenna of the first device, and the first device operates in FR2.

In some embodiments, the first device is an access network device, and the access network device includes at least one of: a type 1-C access network device; a type 1-O access network device; a type 2-O access network device; or a type 1-H access network device.

In some embodiments, the method further includes: sending second information; where the second information includes at least one of: a TEG; a PEG; an RSTD; an RTOA; a reception-transmission time difference; or a LoS or NLoS indicator.

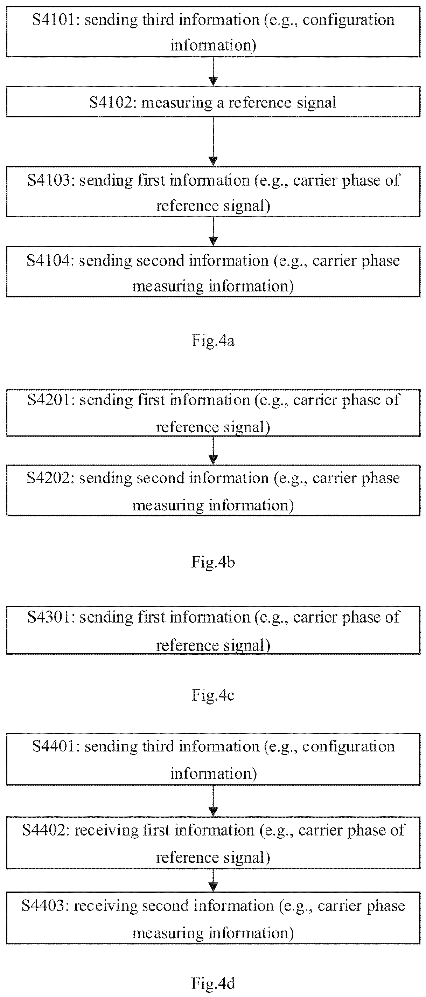

FIG. 4a is a flowchart of still another method for measuring a reference signal according to an exemplary embodiment. As shown in FIG. 4a, an embodiment of the present invention relates to a method for measuring a reference signal, performed by the access network device 102, the method includes:
Step S4101: obtaining third information.

Optional implementations of step S4101 can refer to the optional implementations of step S2101 in FIG. 2 and other related parts in embodiments involved in FIG. 2, which are not repeated here.

In some embodiments, the access network device 102 receives third information sent by the second device. But not limited thereto, it may also receive first information sent by other entities.

In some embodiments, the access network device 102 obtains third information specified by a protocol.

In some embodiments, the access network device 102 obtains third information from an upper layer(s).

In some embodiments, the access network device 102 processes to obtain the third information.

In some embodiments, step S4101 is omitted, and the access network device 102 autonomously implements the function indicated by the third information, or the above function is default or preset.

In some embodiments, if the third information indicates that the terminal 101 measures the reference signal, the access network device 102 may not perform subsequent steps, but instead sends the reference signal to the terminal 101 based on the third information. For example, DL PRS.

Step S4102: measuring the reference signal.

Optional implementations of step S4102 can refer to the optional implementations of step S2102 in FIG. 2 and other related parts in embodiments involved in FIG. 2, which are not repeated here.

Step S4103: sending first information.

Optional implementations of step S4103 can refer to the optional implementations of step S2103 in FIG. 2 and other related parts in embodiments involved in FIG. 2, which are not repeated here.

In some embodiments, the access network device 102 sends the first information to the second device, but not limited thereto, it may also send the first information to other entities.

Step S4104: sending second information.

Optional implementations of step S4104 can refer to the optional implementations of step S2104 in FIG. 2 and other related parts in embodiments involved in FIG. 2, which are not repeated here.

In some embodiments, the access network device 102 sends the second information to the second device, but not limited thereto, it may also send the second information to other entities.

The method for measuring a reference signal involved in embodiments of the present invention may include at least one of steps S4101 to S4104. For example, step S4103 + step S4104 may be implemented as an independent embodiment, step S4102 + step S4103 + step S4104 may be implemented as an independent embodiment, step S4101 + step S4102 + step S4103 + step S4104 may be implemented as an independent embodiment, but not limited thereto.

In some embodiments, steps S4101 and S4104 are optional, and in different embodiments, one or more of these steps may be omitted or replaced.

In some embodiments, steps S4101, S4102, and S4104 are optional, and in different embodiments, one or more of these steps may be omitted or replaced.

FIG. 4b is a flowchart of another method for measuring a reference signal according to an exemplary embodiment. As shown in FIG. 4b, an embodiment of the present invention relates to a method for measuring a reference signal, performed by the access network device 102, the method includes:

Step S4201: sending first information.

Optional implementations of step S4201 can refer to the optional implementations of step S2102 in FIG. 2, the optional implementations of step S2103 in FIG. 2, and other related parts in embodiments involved in FIG. 2, which are not repeated here.

In some embodiments, the access network device 102 sends the first information to the second device, but not limited thereto, it may also send the first information to other entities.

Step S4202: sending second information.

Optional implementations of step S4202 can refer to the optional implementations of step S2104 in FIG. 2 and other related parts in embodiments involved in FIG. 2, which are not repeated here.

In some embodiments, the access network device 102 sends the first information to the second device, but not limited thereto, it may also send the first information to other entities.

The method for measuring a reference signal involved in embodiments of the present invention may include at least one of steps S4201 to S4202.

In some embodiments, step S4102 is optional, and in different embodiments, this step may be omitted or replaced.

FIG. 4c is a flowchart of yet another method for measuring a reference signal according to an exemplary embodiment. As shown in FIG. 4b, an embodiment of the present invention relates to a method for measuring a reference signal, performed by the access network device 102, the method includes:
Step S4301: sending first information.

Optional implementations of step S4301 can refer to the optional implementations of step S2102 in FIG. 2, the optional implementations of step S2103 in FIG. 2, and other related parts in embodiments involved in FIG. 2, which are not repeated here.

In some embodiments, the first information is used to indicate a carrier phase of a reference signal, and wherein the carrier phase is a carrier phase corresponding to a reference point.

In some embodiments, the carrier phase includes at least one of: a first carrier phase corresponding to a first path; a second carrier phase corresponding to a second path, where the second path is a path other than the first path; or a third carrier phase corresponding to any path.

In some embodiments, the first device is an access network device or a TRP, and the reference signal is an uplink sounding reference signal.

In some embodiments, the reference point includes any one of: an antenna connector of the first device; an antenna of the first device; or an array boundary connector of the first device.

In some embodiments, the antenna connector includes at least one of: a transmission antenna connector; or a reception antenna connector.

In some embodiments, the antenna includes at least one of: a transmission antenna; or a reception antenna.

In some embodiments, the array boundary connector includes at least one of: a transmission array boundary connector; or a reception array boundary connector.

In some embodiments, the reference point includes the antenna connector of the first device, and the first device operates in FR1.

In some embodiments, the reference point includes the antenna of the first device, and the first device operates in FR2.

In some embodiments, the first device is an access network device, and the access network device includes at least one of: a type 1-C access network device; a type 1-O access network device; a type 2-O access network device; or a type 1-H access network device.

In some embodiments, the method further includes: sending second information; where the second information includes at least one of: a TEG; a PEG; an RSTD; an RTOA; a reception-transmission time difference; or a LoS or NLoS indicator.

FIG. 4d is a flowchart of still another method for measuring a reference signal according to an exemplary embodiment. As shown in FIG. 4d, an embodiment of the present invention relates to a method for measuring a reference signal, performed by the core network device 103, the method includes:
Step S4401: sending third information.

Optional implementations of step S4401 can refer to the optional implementations of step S2101 in FIG. 2 and other related parts in embodiments involved in FIG. 2, which are not repeated here.

In some embodiments, the core network device 103 sends third information to the first device, but not limited thereto, it may also send third information to other entities.

In some embodiments, if the third information indicates that the terminal 101 measures the reference signal, the access network device 102 may not perform subsequent steps, but instead sends the reference signal to the terminal 101 based on the third information. For example, DL PRS.

Step S4402: obtaining first information.

Optional implementations of step S4402 can refer to the optional implementations of step S2103 in FIG. 2 and other related parts in embodiments involved in FIG. 2, which are not repeated here.

In some embodiments, the core network device 103 receives first information sent by the first device. But not limited thereto, it may also receive first information sent by other entities.

In some embodiments, the core network device 103 obtains first information specified by a protocol.

In some embodiments, the core network device 103 obtains first information from an upper layer(s).

In some embodiments, the core network device 103 processes to obtain the first information.

In some embodiments, step S4402 is omitted, and the core network device 103 autonomously implements the function indicated by the first information, or the above function is default or preset.

Step S4403: obtaining second information.

Optional implementations of step S4403 can refer to the optional implementations of step S2104 in FIG. 2 and other related parts in embodiments involved in FIG. 2, which are not repeated here.

In some embodiments, the core network device 103 receives second information sent by the first device. But not limited thereto, it may also receive second information sent by other entities.

In some embodiments, the core network device 103 obtains second information specified by a protocol.

In some embodiments, the core network device 103 obtains second information from an upper layer(s).

In some embodiments, the core network device 103 processes to obtain the second information.

In some embodiments, step S4403 is omitted, and the core network device 103 autonomously implements the function indicated by the second information, or the above function is default or preset.

In some embodiments, the steps shown in FIG. 4d may also be performed by a network element for location management.

In some embodiments, the network element for location management includes an LMF.

In some embodiments, the network element for location management includes an enhanced serving mobile location center (E-SMLC).

In some embodiments, the network element for location management includes a secure user plane location (SUPL).

In some embodiments, the network element for location management includes a secure user plane location location platform (SUPL SLP).

In some embodiments, the network element for location management includes any one or more of the above network elements.

In some embodiments, the core network device 103 may include a location management function network element. Optionally, the location management function network element includes a location server. The location server may be implemented as any one of: LMF, E-SMLC, SUPL, SUPL SLP.

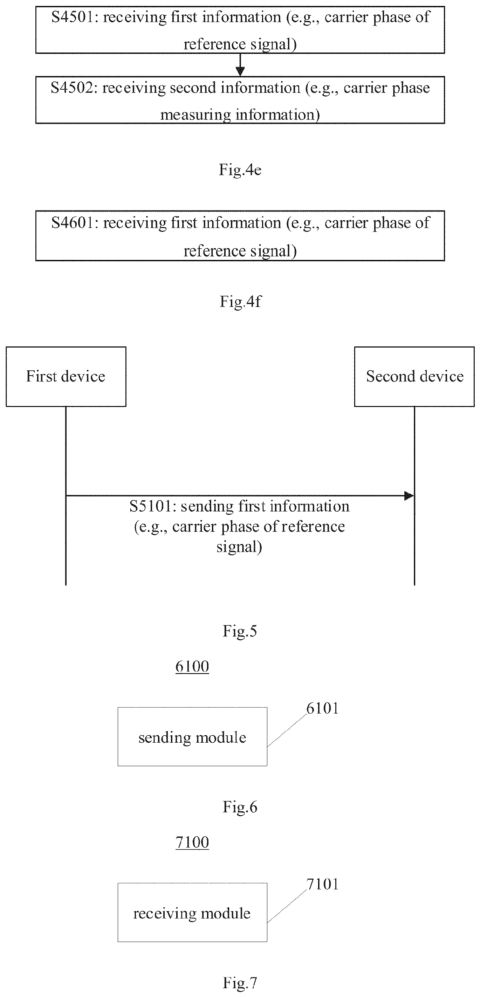

FIG. 4e is a flowchart of another method for measuring a reference signal according to an exemplary embodiment. As shown in FIG. 4e, an embodiment of the present invention relates to a method for measuring a reference signal, performed by the access network device 102, the method includes:
Step S4501: obtaining first information.

Optional implementations of step S4501 can refer to the optional implementations of step S2102 in FIG. 2, the optional implementations of step S2103 in FIG. 2, and other related parts in embodiments involved in FIG. 2, which are not repeated here.

Optional implementations of step S4501 can refer to the optional implementations of step S4402 in FIG. 4d and other related parts in embodiments involved in FIG. 4d, which are not repeated here.

Step S4502: obtaining second information.

Optional implementations of step S4502 can refer to the optional implementations of step S2104 in FIG. 2 and other related parts in embodiments involved in FIG. 2, which are not repeated here.

Optional implementations of step S4502 can refer to the optional implementations of step S4403 in FIG. 4d and other related parts in embodiments involved in FIG. 4d, which are not repeated here.

In some embodiments, the steps shown in FIG. 4e may also be performed by a network element for location management.

Optional implementations of the execution subject of the method shown in FIG. 4e can refer to the optional implementations of embodiments involved in FIG. 4d and other related parts in embodiments involved in FIG. 4d, which are not repeated here.

FIG. 4f is a flowchart of yet another method for measuring a reference signal according to an exemplary embodiment. As shown in FIG. 4f, an embodiment of the present invention relates to a method for measuring a reference signal, performed by the access network device 102, the method includes:
Step S4601: obtaining first information.

Optional implementations of step S4601 can refer to the optional implementations of step S2102 in FIG. 2, the optional implementations of step S2103 in FIG. 2, and other related parts in embodiments involved in FIG. 2, which are not repeated here.

Optional implementations of step S4601 can refer to the optional implementations of step S4402 in FIG. 4d and other related parts in embodiments involved in FIG. 4d, which are not repeated here.

In some embodiments, the steps shown in FIG. 4f may also be performed by a network element for location management.

Optional implementations of the execution subject of the method shown in FIG. 4f can refer to the optional implementations of embodiments involved in FIG. 4d and other related parts in embodiments involved in FIG. 4d, which are not repeated here.

In some embodiments, the first information is used to indicate a carrier phase of a reference signal, and wherein the carrier phase is a carrier phase corresponding to a reference point.

In some embodiments, the carrier phase includes at least one of: a first carrier phase corresponding to a first path; a second carrier phase corresponding to a second path, where the second path is a path other than the first path; or a third carrier phase corresponding to any path.

In some embodiments, the first device is a terminal, and the reference signal is a downlink positioning reference signal.

In some embodiments, the reference point includes any one of: an antenna connector of the first device; or an antenna of the first device.

In some embodiments, the first device is an access network device or a TRP, and the reference signal is an uplink sounding reference signal.

In some embodiments, the reference point includes any one of: an antenna connector of the first device; an antenna of the first device; or an array boundary connector of the first device.

In some embodiments, the antenna connector includes at least one of: a transmission antenna connector; or a reception antenna connector.

In some embodiments, the antenna includes at least one of: a transmission antenna; or a reception antenna.

In some embodiments, the array boundary connector includes at least one of: a transmission array boundary connector; or a reception array boundary connector.

In some embodiments, the reference point includes the antenna connector of the first device, and the first device operates in a frequency range FR1.

In some embodiments, the reference point includes the antenna of the first device, and the first device operates in FR2.

In some embodiments, the first device is an access network device, and the access network device includes at least one of: a type 1-C access network device; a type 1-O access network device; a type 2-O access network device; or a type 1-H access network device.

In some embodiments, the method further includes: receiving second information; where the second information includes at least one of: a TEG; a PEG; an RSTD; an RTOA; a reception-transmission time difference; or a LoS or NLoS indicator.

In some embodiments, the second device is any one of: a core network device; or a network element for location management.

FIG. 5 is a flowchart of still another method for measuring a reference signal according to an exemplary embodiment. As shown in FIG. 5, an embodiment of the present invention relates to a method for measuring a reference signal, used for a communication system 100, the method includes:
Step S5101: a first device sending first information to a second device.

Optional implementations of step S5101 can refer to the optional implementations of step S2102 in FIG. 2, the optional implementations of step S2103 in FIG. 2, and other related parts in embodiments involved in FIG. 2, which are not repeated here.

In some embodiments, the above method may include the methods described in embodiments on the communication system side, terminal side, access network device side, core network device side, first network element side, etc., which are not repeated here.

It can be understood that the first network element may be, for example, a network element for location management.

The present invention also provides a method for measuring a reference signal, which can be combined with the method for measuring a reference signal in any of the above embodiments. The present invention does not limit this. This method will describe the above solution with more specific examples.
(1) A first device reports a reference signal carrier phase, where the reference signal carrier phase is determined based on a reference point.

Based on (1), the reference signal carrier phase includes at least one of:
a reference signal carrier phase corresponding to a first path;
a reference signal carrier phase included in other paths;
a reference signal carrier phase without distinguishing different paths.

The first path is the path that arrives first in time. Signal propagation may go through many paths. For example, the direct path is definitely the first path. But in some cases, there is no direct path. The first path is the one with the shortest propagation distance, because it may undergo various refractions in the middle, and different angles may make the final paths different. Other paths may also be paths other than the first path.

(3) Based on (1), the first device is a UE, and the reference signal carrier phase corresponds to the carrier phase of DL PRS.

(4) Based on (3), the reference point includes an antenna connector of the UE or an antenna of the UE.

(5) Based on (4), the antenna connector includes a transmission antenna connector/reception antenna connector, and the antenna includes a transmission antenna/reception antenna.

(6) Based on (4), when in FR1, the reference point includes the antenna connector of the UE; when in FR2, the reference point includes the antenna of the UE.

It can be understood that since the antenna corresponding to FR1 can be detached from the antenna connector, for FR1, the antenna connector can be considered; but the antenna corresponding to FR2 cannot be detached from the antenna connector, so only the antenna itself can be considered directly.

(7) Based on (1), the first device is an access network device (or TRP), and the reference signal carrier phase corresponds to the carrier phase of UL SRS.

(8) Based on (7), the reference point includes an antenna connector of the access network device, or an antenna of the access network device, or an array boundary connector of the access network device.

(9) Based on (8), the antenna connector of the access network device includes a transmission antenna connector/reception antenna connector of the access network device, the antenna of the access network device includes a transmission antenna/reception antenna, and the array boundary connector of the access network device includes a transmission array boundary connector/reception array boundary connector.

(10) Based on (9), for a type 1-C access network device, the reference point is a transmission/reception antenna connector. The type 1-C access network device is defined as: an NR base station operating at FR1 with a requirement set consisting only of conducted requirements defined at individual antenna connectors (NR base station operating at FR1 with requirements set consisting only of conducted requirements defined at individual antenna connectors).

For a type 1-O access network device or a type 2-O access network device, the reference point is a transmission/reception antenna. The type 1-O access network device is defined as: an NR base station operating at FR1 with a requirement set consisting only of OTA requirements defined at the RIB. The type 2-O access network device is defined as: an NR base station operating at FR2 with a requirement set consisting only of OTA requirements defined at the RIB.

For a type 1-H access network device, the reference point is a transmission/reception array boundary connector.

It can be understood that since the antenna array can be detached from the connector, the array boundary connector is considered.

The type 1-H access network device is defined as: an NR base station operating at FR1 with a requirement set consisting of conducted requirements defined at individual TAB connectors and OTA requirements defined at the RIB.

(11) Based on (1), the first device also reports at least one of the following corresponding to the reference signal carrier phase:
TEG: Tx TEG, Rx TEG, and/or TxRx TEG;
PEG: Tx PEG, Rx PEG, and/or TxRx PEG;
RSTD (reported only by UE);
RTOA (reported only by access network device);
Rx-Tx time difference;
LoS/NLoS indicator;

(12) The above may be sent by the first device, and the second device, i.e., LMF, needs to receive it.

In some embodiments, the first device is a terminal, and the second device is an access network device.

In some embodiments, the first device is an access network device, and the second device is a core network device.

In some embodiments, the first device is a terminal, and the second device is a core network device.

(13) The core network device in embodiments of the present invention includes a location management function network element. Optionally, the location management function network element includes a location server, which may be implemented as any one of: LMF, E-SMLC, SUPL, SUPL SLP.

In accordance with embodiments of the present invention, each step can be implemented as an independent embodiment. Part or all of the steps and their optional implementations can be arbitrarily combined with part or all of the steps of other embodiments, and can also be arbitrarily combined with the optional implementations of other embodiments.

Embodiments of the present invention also provide an apparatus for implementing any of the above method for measuring a reference signals. For example, a reference signal measurement apparatus is provided, the apparatus includes units or modules for implementing the steps performed by the first device (e.g., terminal, access network device) in any of the above methods. Another example, another reference signal measurement apparatus is provided, including units or modules for implementing the steps performed by the second device (e.g., core network function node, core network device, etc.) in any of the above methods.

It should be understood that the division of units or modules in the above apparatus is only a division of logical functions. In actual implementation, they may be fully or partially integrated into one physical entity, or may be physically separate. In addition, the units or modules in the apparatus may be implemented in the form of software called by a processor: for example, the apparatus includes a processor, the processor is connected to a memory, the memory stores instructions, and the processor calls the instructions stored in the memory to implement any of the above methods or to implement the functions of the units or modules of the above apparatus. The processor may be, for example, a general-purpose processor, such as a central processing unit (CPU) or a microprocessor. The memory may be a memory inside the apparatus or a memory outside the apparatus. Alternatively, the units or modules in the apparatus may be implemented in the form of hardware circuits. The functions of some or all of the units or modules may be implemented by designing the hardware circuits. The hardware circuits may be understood as one or more processors. For example, in one implementation, the hardware circuit is an application-specific integrated circuit (ASIC). By designing the logical relationships of the components in the circuit, the functions of some or all of the units or modules are implemented. In another implementation, the hardware circuit may be implemented by a programmable logic device (PLD). Taking a field programmable gate array (FPGA) as an example, it may include a large number of logic gate circuits. The connection relationships between the logic gate circuits are configured by configuration files, thereby implementing the functions of some or all of the units or modules. All units or modules of the above apparatus may be fully implemented by software called by a processor, or fully implemented by hardware circuits, or partially implemented by software called by a processor and the remaining part implemented by hardware circuits.

In accordance with embodiments of the present invention, a processor is a circuit with signal processing capability. In one implementation, the processor may be a circuit with instruction reading and running capability, such as a central processing unit (CPU), a microprocessor, a graphics processing unit (GPU) (which can be understood as a microprocessor), or a digital signal processor (DSP), etc. In another implementation, the processor may implement certain functions through the logical relationships of hardware circuits. The logical relationships of the hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement hardware circuit configuration can be understood as the process of the processor loading instructions to implement the functions of some or all of the units or modules. In addition, it may also be a hardware circuit designed for artificial intelligence, which can be understood as an ASIC, such as a neural network processing unit (NPU), a tensor processing unit (TPU), a deep learning processing unit (DPU), etc.

FIG. 6 is a schematic diagram of a reference signal measurement apparatus according to an exemplary embodiment. As shown in FIG. 6, a first reference signal measurement apparatus 6100 includes: a sending module 6101, configured to send first information, where the first information is used to indicate a carrier phase of a reference signal, and wherein the carrier phase is a carrier phase corresponding to a reference point. Optionally, the sending module 6101 is configured to perform the steps related to sending performed by the first device in any of the above methods, which are not repeated here. Optionally, the first reference signal measurement apparatus 6100 may further include at least one of a receiving module and a processing module. The receiving module is configured to perform the steps related to receiving performed by the first device in any of the above methods. The processing module is configured to perform the steps related to data processing performed by the first device in any of the above methods, which are not repeated here.

FIG. 7 is a schematic diagram of another reference signal measurement apparatus according to an exemplary embodiment. As shown in FIG. 7, a second reference signal measurement apparatus 7100 includes: a receiving module 7101, configured to receive first information sent by a first device, where the first information is used to indicate a carrier phase of a reference signal, and wherein the carrier phase is a carrier phase corresponding to a reference point. Optionally, the receiving module 7101 is configured to perform the steps related to receiving performed by the second device in any of the above methods, which are not repeated here. Optionally, the second reference signal measurement apparatus 7100 may further include at least one of a sending module and a processing module. The sending module is configured to perform the steps related to sending performed by the second device in any of the above methods. The processing module is configured to perform the steps related to data processing performed by the second device in any of the above methods, which are not repeated here.

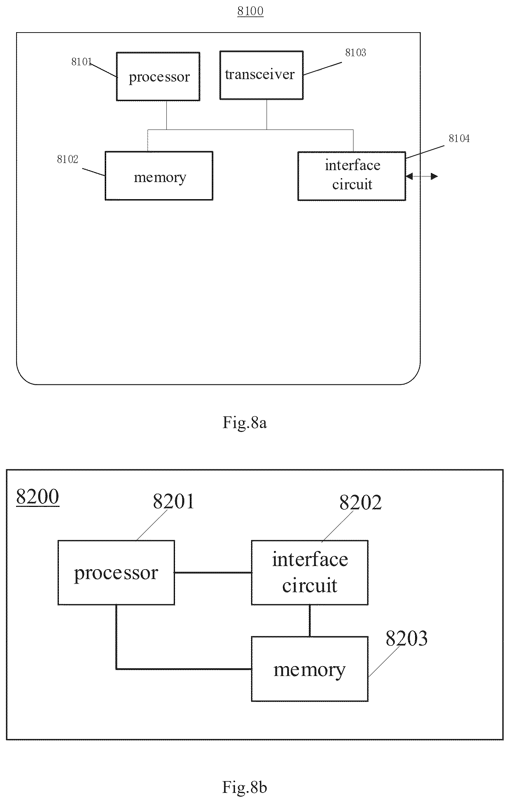

FIG. 8a is a schematic diagram of a communication device 8100 provided by an embodiment of the present invention. The communication device 8100 may be a first device (e.g., user equipment, terminal, access network device, etc.), or a second device (e.g., core network device, core network element, etc.), or a chip, chip system, or processor that supports the access network device to implement any of the above methods, or a chip, chip system, or processor that supports the core network to implement any of the above methods, or a chip, chip system, or processor that supports the terminal to implement any of the above methods. The communication device 8100 may be used to implement the methods described in the above method embodiments. For details, refer to the descriptions in the above method embodiments.

As shown in FIG. 8a, the communication device 8100 includes one or more processors 8101. The processor 8101 may be a general-purpose processor or a special-purpose processor, such as a baseband processor or a central processing unit. The baseband processor may be used to process communication protocols and communication data. The central processing unit may be used to control the communication device (e.g., base station, baseband chip, terminal device, terminal device chip, DU, or CU, etc.), execute programs, and process program data. The processor 8101 is configured to call instructions to cause the communication device 8100 to perform any of the above methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. When the communication device 8100 includes one or more transceivers 8103, the communication steps such as sending and receiving in the above methods are performed by the transceiver 8103, and other steps are performed by the processor 8101.

In some embodiments, the transceiver may include a receiver and a transmitter, which may be separate or integrated together. Optionally, terms such as transceiver, transceiver unit, transceiver machine, transceiver circuit, etc., may be used interchangeably. Terms such as transmitter, transmitter unit, transmitter machine, transmitter circuit, etc., may be used interchangeably. Terms such as receiver, receiver unit, receiver machine, receiver circuit, etc., may be used interchangeably.

Optionally, the communication device 8100 further includes one or more interface circuits 8104. The interface circuit 8104 is connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 in the above embodiment description may be a network device or a terminal, but the scope of the communication device 8100 described in the present invention is not limited thereto. The structure of the communication device 8100 may not be limited by FIG. 8a. The communication device may be an independent device or part of a larger device. For example, the communication device may be: 1) an independent integrated circuit (IC), or chip, or chip system or subsystem; 2) a set of one or more ICs. Optionally, the set of ICs may also include storage components for storing data and programs; 3) an ASIC, such as a modem (Modem); 4) a module that can be embedded in other devices; 5) a receiver, terminal device, smart terminal device, cellular phone, wireless device, handset, mobile unit, vehicle-mounted device, network device, cloud device, artificial intelligence device, etc.; 6) others, etc.

FIG. 8b is a schematic diagram of a chip 8200 structure provided by an embodiment of the present invention. For the case where the communication device 8100 may be a chip or chip system, refer to the schematic diagram of the chip 8200 structure shown in FIG. 8b, but it is not limited thereto.

The chip 8200 includes one or more processors 8201. The processor 8201 is configured to call instructions to cause the chip 8200 to perform any of the above methods.

In some embodiments, the chip 8200 further includes one or more interface circuits 8202. The interface circuit 8202 is connected to a memory 8203. The interface circuit 8202 may be used to receive signals from the memory 8203 or other devices, and may be used to send signals to the memory 8203 or other devices. For example, the interface circuit 8202 may read instructions stored in the memory 8203 and send the instructions to the processor 8201. Optionally, terms such as interface circuit, interface, transceiver pin, transceiver, etc., may be used interchangeably.

In some embodiments, the chip 8200 further includes one or more memories 8203 for storing instructions. Optionally, all or part of the memory 8203 may be outside the chip 8200.

The present invention also provides a storage medium. The storage medium stores instructions. When the instructions are run on the communication device 8100, the communication device 8100 is caused to perform any of the above methods. Optionally, the storage medium is an electronic storage medium. Optionally, the storage medium is a computer-readable storage medium, but not limited thereto. It may also be a storage medium readable by other devices. Optionally, the storage medium may be a non-transitory storage medium, but not limited thereto. It may also be a transitory storage medium.

The present invention also provides a program product. When the program product is executed by the communication device 8100, the communication device 8100 is caused to perform any of the above methods. Optionally, the program product is a computer program product.

The present disclosure or invention also provides a computer program. When run on a computer, it causes the computer to perform any of the above methods.

## Claims

1. A method for measuring a reference signal, performed by a first device, comprising:
sending first information, wherein the first information is used to indicate a carrier phase of a reference signal, and wherein the carrier phase is a carrier phase corresponding to a reference point.

2. The method according to claim 1, wherein the carrier phase comprises at least one of:
a first carrier phase corresponding to a first path;
a second carrier phase corresponding to a second path, wherein the second path is a path other than the first path; or
a third carrier phase corresponding to any path.

3. The method according to claim 1 or 2, wherein the first device is a terminal, and the reference signal is a downlink positioning reference signal.

4. The method according to claim 3, wherein the reference point comprises any one of:
an antenna connector of the first device; or
an antenna of the first device.

5. The method according to claim 1 or 2, wherein the first device is an access network device or a transmission and reception point (TRP), and the reference signal is an uplink sounding reference signal.

6. The method according to claim 5, wherein the reference point comprises any one of:
an antenna connector of the first device;
an antenna of the first device; or
an array boundary connector of the first device.

7. The method according to claim 4 or 6, wherein the antenna connector comprises at least one of:
a transmission antenna connector; or
a reception antenna connector.

8. The method according to claim 4 or 6, wherein the antenna comprises at least one of:
a transmission antenna; or
a reception antenna.

9. The method according to claim 6, wherein the array boundary connector comprises at least one of:
a transmission array boundary connector; or
a reception array boundary connector.

10. The method according to claim 4, wherein the reference point comprises the antenna connector of the first device, and the first device operates in a frequency range 1 (FR1).

11. The method according to claim 4, wherein the reference point comprises the antenna of the first device, and the first device operates in a frequency range 2 (FR2).

12. The method according to claim 4 or 6, wherein the first device is an access network device, and the access network device comprises at least one of:
a type 1-C access network device;
a type 1-O access network device;
a type 2-O access network device; or
a type 1-H access network device.

13. The method according to any one of claims 1 to 12, further comprising: sending second information;
wherein the second information comprises at least one of:
a timing error group (TEG);
a phase error group (PEG);
a reference signal time difference (RSTD);
a relative time of arrival (RTOA);
a reception-transmission time difference; or
a line of sight (LoS) or non-line of sight (NLoS) indicator.

14. A method for measuring a reference signal, performed by a second device, comprising:
receiving first information sent by a first device, wherein the first information is used to indicate a carrier phase of a reference signal, and wherein the carrier phase is a carrier phase corresponding to a reference point.

15. The method according to claim 14, wherein the carrier phase comprises at least one of:
a first carrier phase corresponding to a first path;
a second carrier phase corresponding to a second path, wherein the second path is a path other than the first path; or
a third carrier phase corresponding to any path.

16. The method according to claim 14 or 15, wherein the first device is a terminal, and the reference signal is a downlink positioning reference signal.

17. The method according to claim 16, wherein the reference point comprises any one of:
an antenna connector of the first device; or
an antenna of the first device.

18. The method according to claim 14 or 15, wherein the first device is an access network device or a transmission and reception point (TRP), and the reference signal is an uplink sounding reference signal.

19. The method according to claim 18, wherein the reference point comprises any one of:
an antenna connector of the first device;
an antenna of the first device; or
an array boundary connector of the first device.

20. The method according to claim 17 or 19, wherein the antenna connector comprises at least one of:
a transmission antenna connector; or
a reception antenna connector.

21. The method according to claim 17 or 19, wherein the antenna comprises at least one of:
a transmission antenna; or
a reception antenna.

22. The method according to claim 19, wherein the array boundary connector comprises at least one of:
a transmission array boundary connector; or
a reception array boundary connector.

23. The method according to claim 17, wherein the reference point comprises the antenna connector of the first device, and the first device operates in a frequency range 1 (FR1).

24. The method according to claim 17, wherein the reference point comprises the antenna of the first device, and the first device operates in a frequency range 2 (FR2).

25. The method according to claim 17 or 19, wherein the first device is an access network device, and the access network device comprises at least one of:
a type 1-C access network device;
a type 1-O access network device;
a type 2-O access network device; or
a type 1-H access network device.

26. The method according to any one of claims 14 to 25, further comprising: receiving second information;
wherein the second information comprises at least one of:
a timing error group (TEG);
a phase error group (PEG);
a reference signal time difference (RSTD);
a relative time of arrival (RTOA);
a reception-transmission time difference; or
a line of sight (LoS) or non-line of sight (NLoS) indicator.

27. The method according to any one of claims 14 to 26, wherein the second device is one of:
a core network device; or
a network element for location management.

28. A method for measuring a reference signal, performed by a communication system, comprising:
sending, by a first device, first information, wherein the first information is used to indicate a carrier phase of a reference signal, and wherein the carrier phase is a carrier phase corresponding to a reference point; and
receiving, by a second device, the first information.

29. A first apparatus for measuring a reference signal, comprising:
a sending module configured to send first information, wherein the first information is used to indicate a carrier phase of a reference signal, and wherein the carrier phase is a carrier phase corresponding to a reference point.

30. A second apparatus for measuring a reference signal, comprising:
a receiving module configured to receive first information sent by a first device, wherein the first information is used to indicate a carrier phase of a reference signal, an wherein d the carrier phase is a carrier phase corresponding to a reference point.

31. A communication device, comprising:
one or more processors;
wherein the processor is configured to invoke instructions to cause the communication device to perform the method for measuring a reference signal according to any one of claims 1 to 13 and 14 to 27.

32. A communication system, comprising a terminal and a network device, wherein the terminal is configured to perform the method for measuring a reference signal according to any one of claims 1 to 13, and the network device is configured to perform the method for measuring a reference signal according to any one of claims 14 to 27.

33. A storage medium having stored therein instructions that, when run on a communication device, cause the communication device to perform the method for measuring a reference signal according to any one of claims 1 to 13 and 14 to 27.
